# EUROPÄISCHE PATENTSCHRIFT

(11) **EP 3 583 613 B1**
(45) Veröffentlichungstag und Bekanntmachung des Hinweises auf die Patenterteilung: **28.04.2021**
(21) Anmeldenummer: 18714169.2
(22) Anmeldetag: 14.03.2018
(51) Int. Cl.: H01F 5/02, H01F 41/082, H01F 41/088

(54) **SPULENGRUNDKÖRPER ZUR HERSTELLUNG EINES WIRBELSTROMSENSORS, EINEN WIRBELSTROMSENSOR SOWIE EINE VORRICHTUNG, UM EINEN SPULENDRAHT AUF DEN SPULENGRUNDKÖRPER ZUR HERSTELLUNG EINES SOLCHEN WIRBELSTROMSENSORS ZU WICKELN**
COIL FORMER FOR PRODUCING AN EDDY CURRENT SENSOR, EDDY CURRENT SENSOR AND APPARATUS IN ORDER TO WIND A COIL WIRE ONTO THE COIL FORMER FOR PRODUCING SUCH AN EDDY CURRENT SENSOR
CORPS DE BASE DE BOBINE POUR FABRIQUER UN CAPTEUR À COURANTS DE FOUCAULT, CAPTEUR À COURANTS DE FOUCAULT ET DISPOSITIF D'ENROULEMENT D'UN FIL DE BOBINAGE SUR LE CORPS DE BASE DE BOBINE POUR FABRIQUER UN TEL CAPTEUR À COURANTS DE FOUCAULT

(30) Priorität: 13.04.2017 DE 102017206368
(43) Veröffentlichungstag der Anmeldung: 25.12.2019
(73) Patentinhaber: Siemens Energy Global GmbH & Co. KG, 81739 München (DE)
(72) Erfinder: CLOSSEN-VON LANKEN SCHULZ, Michael, 47661 Issum (DE); OBERMAYR, Stefan, 47199 Duisburg (DE)
(86) Internationale Anmeldenummer: PCT/EP2018/056379
(87) Internationale Veröffentlichungsnummer: WO 2018/188878

(56) Entgegenhaltungen:
- WO-A1-2004/086559
- DE-A1- 10 157 796
- JP-A- H06 295 838
- JP-A- 2015 225 068
- US-A- 4 958 777
- US-A1- 2004 066 191
- US-A1- 2004 257 072
- US-A1- 2015 155 629
- US-A1- 2016 259 954
- US-B2- 9 267 921

## Beschreibung

Die Erfindung einen Spulengrundkörper zur Herstellung eines Wirbelstromsensors, einen Wirbelstromsensor sowie eine Vorrichtung, um einen Spulendraht auf den Spulengrundkörper zur Herstellung eines solchen Wirbelstromsensors zu wickeln.

In Axialströmungsmaschinen wie Turbinen oder Verdichtern sind zur Befestigung der Rotorschaufeln Aufnahmenuten, die auch als "Wellenklauen" bezeichnet werden, entlang des Umfangs einer Welle oder einer an der Welle befestigten Radscheibe äquidistant beabstandet vorgesehen und erstrecken sich in axialer Richtung der Strömungsmaschine durch die Welle bzw. die Radscheibe. Die Kontur der Aufnahmenuten entspricht dabei der Kontur der aufzunehmenden Schaufelfüße, so dass die Schaufelfüße in axialer Richtung in die Aufnahmenuten eingeschoben werden können und im montierten Zustand formschlüssig in der jeweiligen Aufnahmenut sitzen, so dass sie bei Rotation des Rotors in radialer Richtung der Strömungsmaschine sicher an der Welle gehalten werden. Eine hinlänglich bekannte und vielfach zum Einsatz kommende Kontur der Aufnahmenuten und korrespondierenden Schaufelfüße ist die sog. "Tannenbau-Kontur", wie sie in Figur 10 gezeigt und beispielsweise aus der EP 2 282 010 A1 bekannt ist.

Im Betrieb der Strömungsmaschine unterliegen die Schaufeln hohen mechanischen Beanspruchungen insbesondere im Bereich der Aufnahmenuten, die zu Ermüdungserscheinungen und Beschädigungen der Bauteile führen können. Insbesondere kann es an den Bauteilen betriebsbedingt zu Rissbildungen kommen.

Von daher ist es erforderlich, die betriebsbeanspruchten Bauteile und insbesondere die Aufnahmenuten von Rotoren regelmäßig auf solche Rissbildungen zu prüfen. Die Prüfung erfolgt zerstörungsfrei, wobei aufgrund ihrer hohen Empfindlichkeit in erster Linie die fluoreszierende Magnetpulverprüfung zum Einsatz kommt. An diesem Prüfverfahren wird als nachteilig angesehen, dass chemische Prüfmittel zum Einsatz kommen. Also problematisch wird weiter erachtet, dass der Prüfbereich für die Magnetpulverprüfung abgedunkelt werden muss und im Rahmen der Prüfung für den Menschen schädliches UV-Licht zum Einsatz kommt. Ferner ist die Magnetpulver Prüfung eine Sichtprüfung, weshalb eine bildgebende Dokumentation aller Anzeigen mit Aufzeichnung sämtlicher Daten in digitaler Form der gesamten Wellenklauenoberfläche schwierig ist.

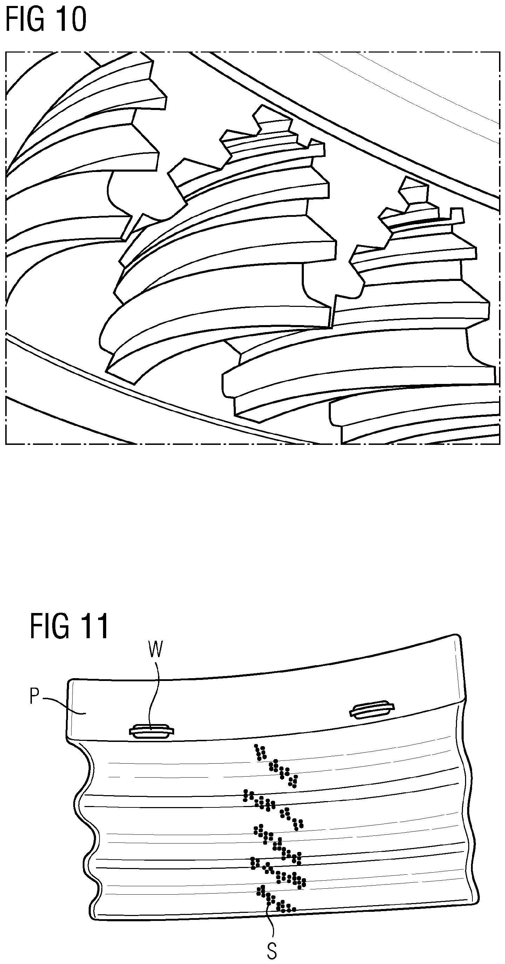

Um diesen Problemen zu begegnen wird alternativ die Wirbelstromprüftechnik für die Prüfung von Wellenklauen entwickelt. Dabei werden Arrays aus zwischen 32 und 256 einzelnen Wirbelstromsensoren S bzw. Wirbelstromsonden eingesetzt. Ein zur Prüfung einer Wellenklaue konturangepasstes SLS-Prüfstück P mit 128 einzelnen Wirbelstromsensoren S und zwei integrierten Weggebern W ist in der Figur 11 dargestellt.

Die US 2004/0066191 A1 offenbart eine Wirbelstromsonde umfassend zwei Magnetspulen, die um einen gemeinsamen, rechteckigen Spulengrundkörper aus Material mit einer hohen magnetischen Leitfähigkeit gewickelt sind, wobei der Spulengrundkörper zum Magnetkern wird. Eckpfosten, welche ebenfalls aus einem Material mit hoher magnetischer Leitfähigkeit bestehen, hängen von einer Front des Spulengrundkörpers an dessen Ecken ab. Die Magnetspulen sind um jeweils zwei gegenüberliegende Seiten des Spulengrundkörpers, welche jeweils zwischen zwei Paaren der Eckpfosten verlaufen, gewickelt, wobei sich beide Magnetspulen auf dem Spulengrundkörper orthogonal kreuzen.

Die US 2004/0257072 A1 betrifft eine Wirbelstromprüfsonde zum Prüfen eines rohrförmigen Elements aus elektrisch leitendem Material, um in diesem Effekte zu erfassen und zu lokalisieren. Diese umfasst einen Spulengrundkörper mit zwei Spulen, welche orthogonal zueinander auf einen gemeinsamen rechteckigen Magnetkern gewickelt sind.

Die US 9 267 921 B2 offenbart einen Wirbelstromsensor, um Defekte in einem rohrförmigen Element aus elektrisch leitfähigem Material zu lokalisieren. Dieser umfasst zwei Spulen, welche um einen Kern aus magnetisch leifähigem Material gewickelt sind, wobei die Spulen sich unter einem Winkel von 90° entlang der Längsachse des Kerns kreuzen.

Die US 2015/0155629 A1 beschreibt eine dreiachsige Antenne, welche drei Spulen umfasst, die zueinander orthogonal um einen Ferritkern gewickelt sind.

Die DE 10 157 796 A1 offenbart eine dreidimensionale Wicklungsanordnung zur Erzeugung elektrischer Energie aus einem Magnetfeld, welche drei Wicklungen umfasst, deren Wicklungsachsen jeweils rechtwinklig zueinander angeordnet sind und sich in einem gemeinsamen Punkt schneiden. Dabei ist ein würfelförmiger Wicklungsträger vorgesehen.

Die US 2016/0259954 A1 betrifft ein Antennensystem zum Detektieren von mit Transpondern gekennzeichneten Objekten, umfassend zwei Sätze von drei Antennenelementen, welche zueinander orthogonal angeordnet sind, um Signale in drei Koordinatenrichtungen zu senden und zu empfangen.

Die WO 2004/086559 betrifft eine Antenne, aufweisend eine Spule mit einem Kern aus nicht-magnetischen Metall, um welchen drei Spulenelemente zueinander orthogonal gewickelt sind.

Die JP 2015-225068 A betrifft einen Wirbelstromsensor.

Die JPH 06 295 838 (A) offenbart eine Wickelvorrichtung.

Die US 4 958 777 betrifft eine Wickelvorrichtung zum Fertigen von Statorspulen für Luftkernmessgeräte, welche zwei zueinander orthogonale Spulen mit gleichen Radien aufweisen.

Ein Problem beim Einsatz der Wirbelstromtechnik besteht darin, dass die Prüfempfindlichkeit kleiner Einzelsensoren im Bereich stark gekrümmter Konturen geringer als bei der fluoreszierenden Magnetpulverprüfung ist. Untersuchungen haben zwar gezeigt, dass deutlich größere, kreuzgewickelte Wirbelstromsensoren eine ausreichende Empfindlichkeit an einfachen, flachen Oberflächen besitzen, diese jedoch aufgrund ihrer Baugröße und -form nicht nahe genug an sämtliche zu erreichende Stellen innerhalb einer Wellenklauenkontur bringbar sind, um ein ausreichend gutes Signal zu erzeugen.

Ferner werden zur Herstellung kreuzgewickelter Spulen üblicherweise zwei zylindrisch gewickelte Spulen mit 90° Versatz zueinander ineinandergesteckt und in Kunststoff vergossen. Dies kann jedoch zu Unterschieden in der Prüfleistung der einzelnen Spulen führen, da sich von den beiden ineinander gesteckten Spulen eine zwangsläufig immer näher am Prüfgegenstand befindet als die andere.

Die vorgenannten Probleme vorhandener Wirbelstromsensoren machen es wünschenswert, speziell angepasste Wirbelstromsensor-Formen herzustellen, die so geformt sind, dass sie nahe genug an die jeweils zu prüfenden Kontur innerhalbe einer Wellenklaue bringbar sind und deren Wicklungen eine hohen Wicklungszahl sowie Wicklungsdichte aufweisen.

Diese Aufgabe wird zunächst gelöst durch Spulengrundkörper zur Herstellung eines Wirbelstromsensors mit einem eine Längsachse definierenden Wickelkopf, in dessen Außenfläche zwei Umfangsnuten ausgebildet sind, sich jeweils entlang des gesamten Umfangs des Wickelkopfs um einen Wickelkern erstrecken, wobei sich die Umfangsnuten an der Oberseite und der Unterseite des Wickelkopfes an der Längsachsenposition kreuzen und zur Aufnahme eines um den Wickelkern nach Art einer Kreuzwicklung zu wickelnden Spulendrahtes dienen, und wobei die Umfangsnuten in Umfangsrichtung betrachtet durch Haltestege begrenzt werden, die sich in der Längsachsenrichtung erstrecken und in Richtung der beiden axialen Endbereiche des Wickelkerns, sowie in radialer Richtung über den Wickelkern vorstehen. Ein Wirbelstromsensor gemäß der Erfindung besitzt einen solchen Spulengrundkörper, wobei im Bereich der Umfangsnuten ein Spulendraht um den Wickelkern gewickelt ist und in dem Wickelkern, insbesondere in einem Kreuzungsbereich der beiden Umfangsnuten, eine Aufnahme für eine Kugel aus ferromagnetischem Material ausgebildet ist.

Die Erfindung schafft damit eine völlig neue Vorgehensweise bei der Herstellung von Wirbelstromsensoren, indem zunächst ein Spulengrundkörper mit sich kreuzenden Umfangsnuten hergestellt wird und anschließend in die Umfangsnuten ein entsprechender Spulendraht nach Art einer Kreuzwicklung um den Wickelkern gewickelt wird. Durch die Kugel aus ferromagnetischem Material, für welche in dem Wickelkern eine Aufnahme ausgebildet ist, kann das von dem Wirbelstromsensor erzeugte Magnetfeld in Richtung des Prüfbereichs verzerrt werden. Diese neue Herangehensweise ermöglicht es zunächst, dass die sich kreuzenden Wickelungen miteinander "verwoben" werden können, um einen gleichmäßigen Abstand der Wicklungen zur Prüfoberfläche zu gewährleisten. Hierzu kann der Spulendraht in die sich insbesondere unter einem Wickel von 90° kreuzenden Umfangsnuten um den Wickelkern gelegt werden. Zweckmäßigerweise wird der Spulendraht dabei in Schichten jeweils bestehend aus einer vorgegebenen Anzahl von Wicklungen im Wechsel in der einen Umfangsnut und in der anderen Umfangsnut um den Wickelkern gewickelt. Der Wickelvorgang erfolgt bevorzugt derart, dass die Wicklungen einer Schicht eng nebeneinanderliegend in der Umfangsnut platziert sind und diese über deren gesamte Breite ausfüllen. Auf diese Weise werden definierte Wicklungslagen oder -schichten gebildet, die geordnet übereinandergelegt werden können, so dass der Platzbedarf minimiert wird.

Die Haltestege, welche die Umfangsnuten begrenzen bzw. definieren, sind relativ schmal und können jeweils an die am wenigsten zugängliche Stelle innerhalb der Wellenklaue angepasste Kontur besitzen. Dabei sind die Spulengrundkörper zweckmäßigerweise symmetrisch in der Weise ausgebildet, dass zwei einander diametral gegenüberliegende Haltestege zueinander korrespondierende Querschnitte aufweisen, d.h. zueinander korrespondierend geformt sind. Ebenso können die Haltestege eine in der Längsrichtung und/oder der Umfangsrichtung konkav gekrümmte Außenfläche aufweisen.

Ferner kann es zweckmäßig sein, wenn ein Haltesteg oder mehrere Haltestege zu einem axialen Endbereich oder beiden axialen Endbereichen des Wickelkörpers hin spitz zulaufend ausgebildet sind.

Gemäß einer Ausführungsform der Erfindung ist vorgesehen, dass in den axial vorderen oder hinteren Stirnflächen von zwei Halteelementen, insbesondere von zwei einander diametral gegenüberliegenden Halteelementen, Aufnahmen ausgebildet sind, in welche elektrische Anschlussfahnen eingesteckt oder einsteckbar sind.

Gemäß der Erfindung ist in dem Wickelkern, insbesondere in einem Kreuzungsbereich der beiden Umfangsnuten, eine Aufnahme für eine Kugel aus ferromagnetischem Material ausgebildet. Durch eine solche Kugel kann das von dem Wirbelstromsensor erzeugte Magnetfeld in Richtung des Prüfbereichs verzerrt werden.

Um den Spulengrundkörper während des Wickelns des Spulendrahtes halten zu können, ist bevorzugt an der Außenseite eines Haltestegs ein Befestigungszapfen zur Halterung des Spulengrundkörpers vorgesehen, der nach dem Wickeln von dem Haltesteg getrennt wird. Der Befestigungszapfen kann insbesondere radial von dem Haltesteg abragen. Dies ist zweckmäßig, wenn der Wickelvorgang - wie nachfolgend noch beschrieben wird - automatisch in einer Wickelvorrichtung durchgeführt wird.

Der Wickelkörper kann durch ein generatives Fertigungsverfahren, insbesondere durch ein selektives Lasersinterverfahren (SLS) hergestellt werden. Dabei kann der Wickelkörper aus einem Kunststoffmaterial und/oder einem keramischen Material bestehen.

Das Herstellen der Wicklungen an dem Spulengrundkörper kann manuell erfolgen. Erfindungsgemäß wurde jedoch eine Wickelvorrichtung entwickelt, um einen Spulendraht auf einen erfindungsgemäßen Spulengrundkörper zu wickeln, welche umfasst:
- einen Basiskörper,
- eine Halterung, die an dem Basiskörper vorgesehen und ausgebildet ist, um einen Spulengrundkörper mit einer definierten Position und Ausrichtung seiner Längsachse zu fixieren und den Spulengrundkörper um seine Längsachse zwischen zwei definierten, den Umfangsnuten des Spulengrundkörpers zugeordneten Drahtwickelpositionen um einen vorgegebenen Winkel, welcher dem Winkelversatz der Umfangsnuten des Spulengrundkörpers entspricht und bevorzugt 90° beträgt, zu verschwenken, so dass in jeder Drahtwickelposition die zugeordnete Umfangsnut eine definierte Wickelausrichtung in einer die Längsachse einschließenden Wickelebene einnimmt, die in beiden Drahtwickelpositionen übereinstimmen, und
- eine Drahtführung für den Spulendraht, die ausgebildet und an dem Basiskörper angeordnet ist, um in einer zu der Wickelebene parallelen Ebene eine Wickelbewegung entlang einer Kreisbahn um einen in der Halterung fixierten Spulengrundkörpers und zusätzlich eine translatorische Vorschubbewegung quer, insbesondere senkrecht zu der Wickelebene auszuführen.

Dabei ist die Halterung insbesondere ausgebildet, um den Spulengrundkörper in der Weise zu halten, dass seine Längsachse vertikal ausgerichtet ist. Entsprechend ist dann die Drahtführung ausgebildet, entlang einer Kreisbahn in einer vertikalen Ebene um einen in der Halterung fixierten Spulengrundkörper bewegt zu werden.

Erfindungsgemäß wird somit der erfindungsgemäße Spulengrundkörper in der Halterung mit einer definierten Position und Ausrichtung seiner Längsachse fixiert. Hierzu kann die Halterung eine Aufnahme aufweisen, in welche der Befestigungszapfen des Spulengrundkörpers horizontal eingeschoben und fixiert, insbesondere festgeklemmt werden kann. Dabei sind die Aufnahme und der Befestigungszapfen in der Weise komplementär zueinander ausgerichtet, dass der Befestigungszapfen und damit der Spulengrundkörper seine gewünschte Lage einnimmt.

Anschließend wird der Spulengrundkörper in eine seiner beiden Drahtwickelpositionen gebracht, in welcher eine der beiden Umfangsnuten in der Wickelebene bzw. in einer hierzu parallelen Ebene liegt, so dass ein Spulendraht in dieser Umfangsnut um den Wickelkern des Spulengrundkörpers gewickelt werden kann. Hierzu wird der Spulendraht durch die Drahtführung gefädelt und sein freies Ende an dem Spulengrundkörper fixiert. Dann wird die Drahtführung um den Spulengrundkörper entlang der definierten Kreisbahn bewegt und so der Spulendraht um den Wickelkern gelegt. Während dieser kreisförmigen Wickelbewegung führt die Drahtführung zusätzlich eine translatorische Vorschubbewegung aus, so dass die Spulenwicklungen in einer Wicklungsschicht oder -lage sauber nebeneinander in der Vorschubrichtung gelegt werden.

Wenn eine gewünschte Anzahl von Wicklungen in der Umfangsnut hergestellt ist, wird die Halterung verschwenkt, so dass der Spulengrundkörper um seine Längsachse in seine zweite Drahtwickelposition gedreht wird. In dieser nimmt die zweite Umfangsnut die gewünschte Wickelposition und -ausrichtung ein, so dass der Spulendraht in der zweiten Umfangsnut um den Wickelkern gelegt werden kann, indem die Drahtführung um den Spulengrundkörper gedreht wird und gleichzeitig eine translatorische Vorschubbewegung ausführt. Wenn eine ausreichende Anzahl von Wicklungen in dieser zweiten Wicklungsschicht hergestellt ist, die bevorzugt der Anzahl von Wicklungen in der ersten Wicklungsschicht entspricht, wird der Spulengrundkörper durch Verschwenkung der Halterung wieder in seine erste Wickelposition zurückgedreht, um eine weitere Schicht von Spulenwicklungen in der ersten Umfangsnut herzustellen. Dieser Vorgang wird so lange wiederholt, bis eine hinreichende Anzahl von Wicklungsschichten oder -lagen hergestellt ist.

Zur Ausführung der Kreisbewegung ist die Drahtführung gemäß einer Ausführungsform der Erfindung an einem Träger angebracht, welcher der Halterung für den Spulengrundkörper gegenüberliegend positioniert und um die Achse der von der Drahtführung zur beschreibenden Kreisbahn drehbar sowie zur Ausführung der Vorschubbewegung translatorisch bewegbar an dem Basisträger gehalten ist. Dabei ist dem Träger wenigstens ein Antrieb zugeordnet, über welchen der Träger rotierend angetrieben und zur Ausführung der Vorschubbewegung translatorisch verstellt werden kann.

Zusätzlich kann ein Drehencoder vorgesehen sein, um die jeweilige Winkelposition des Trägers zu erfassen, wobei der Drehencoder mit einer zentralen Steuerung gekoppelt ist, um die Rotationsbewegung und/oder die translatorische Bewegung des Trägers und/oder die von der Halterung auszuführende Schwenkbewegung in Abhängigkeit von Signalen des Drehencoders zu steuern. Hierzu weist der Träger zweckmäßigerweise ein Orbitalrad auf, das an seinem Außenumfang eine Verzahnung trägt, mit welcher eine entsprechende Gegenverzahnung des Drehencoders in Eingriff steht.

In weiterer Ausgestaltung der Erfindung ist an dem Basiskörper oder an dem Träger ein Spulenhalter vorgesehen, an dem eine Entnahmespule für den Spulendraht so anbringbar oder angebracht ist, dass sie um eine Spulenhalterachse, die koaxial zu der Achse der von der Drahtführung zu beschreibenden Kreisbahn oder parallel zu dieser verläuft, drehbar ist. In diesem Fall ist die Drahtführung bevorzugt derart ausgebildet, dass ein Drahteinlassbereich der Drahtführung im axialen Erstreckungsbereich der Entnahmespule liegt und ein Auslassbereich der Drahtführung in einem axialen Erstreckungsbereich, in welchem ein Spulendraht auf einen Spulengrundkörper gewickelt werden soll, liegt.

In diesem Ausführungsbeispiel ist also eine Entnahmespule vorgesehen, die als Reservoir für den Spulendraht dient, welcher auf die Entnahmespule aufgewickelt ist. Im Betrieb wird der Spulendraht von der Entnahmespule abgewickelt, wodurch diese um die Spulenachse gedreht wird. Dem Spulenhalter sind zweckmäßigerweise Bremsmittel zugeordnet, die mit einer an dem Spulenhalter gehaltenen Entnahmespule in Reibkontakt bringbar sind, um diese abzubremsen und hierdurch die Drahtspannung in dem von der Entnahmespule abgewickelten Spulendraht einzustellen.

Gemäß einer Ausführungsform der Erfindung weist die Halterung für den Spulengrundkörper einen Rahmen C-förmiger Grundform auf, welcher um die Längsachse schwenkbar an dem Basiskörper gehalten ist und der insbesondere an seinen oberen und unteren Enden an einem ebenfalls C-förmigen Lagerrahmen, der an dem Basiskörper fixiert ist, gelagert ist. Die Anordnung ist dabei so getroffen, dass der C-förmige Halterahmen eine solche Größe besitzt, dass der C-förmige Rahmen der Halterung für den Spulengrundkörper innerhalb des Lagerrahmens frei bewegt werden kann. Die C-förmige Ausgestaltung des Rahmens ermöglicht es, die Drahtführung frei um einen gespannten Spulenkörper zu bewegen.

Der Rahmen der Halterung kann dabei eine Verzahnung tragen, die mit einer Gegenverzahnung eines Motors in Eingriff steht, um den Rahmen und damit die Halterung zwischen den Wickelpositionen zu verschwenken, wobei der Motor bevorzugt mit der zentralen Steuerung verbunden ist und über diese betätigt wird.

Nachfolgend werden eine Ausführungsform eines Wirbelstrom-sensors sowie einer Wickelvorrichtung zur Herstellung einer solchen unter Bezugnahme auf die beiliegende Zeichnung erläutert. In der Zeichnung zeigt
- Figur 1: einen Wirbelstromsensor gemäß der vorliegenden Erfindung in perspektivischer Vorderansicht,
- Figur 2: den Spulengrundkörper des Wirbelstromsensors aus Figur 1 in einer perspektivischen Vorderansicht,
- Figur 3: den Spulengrundkörper aus Figur 2 in Vorderansicht,
- Figur 4: den Spulengrundkörper aus Figur 3 in Draufsicht,
- Figur 5: eine Wickelvorrichtung zum Wickeln eines Spulendrahtes auf einen Spulengrundkörper in perspektivischer Vorderansicht,
- Figur 6: einen Ausschnitt aus Figur 5 in vergrößerter Darstellung,
- Figuren 7 bis 9: Arbeitsschritte eines mit der Wickelvorrichtung durchgeführten Wickelvorgangs,
- Figur 10: eine tannenbaumförmig ausgebildete, herkömmliche Aufnahmekontur und
- Figur 11: einen Prüfkörper mit daran vorgesehenen Wirbelstromsensoren aus dem Stand der Technik.

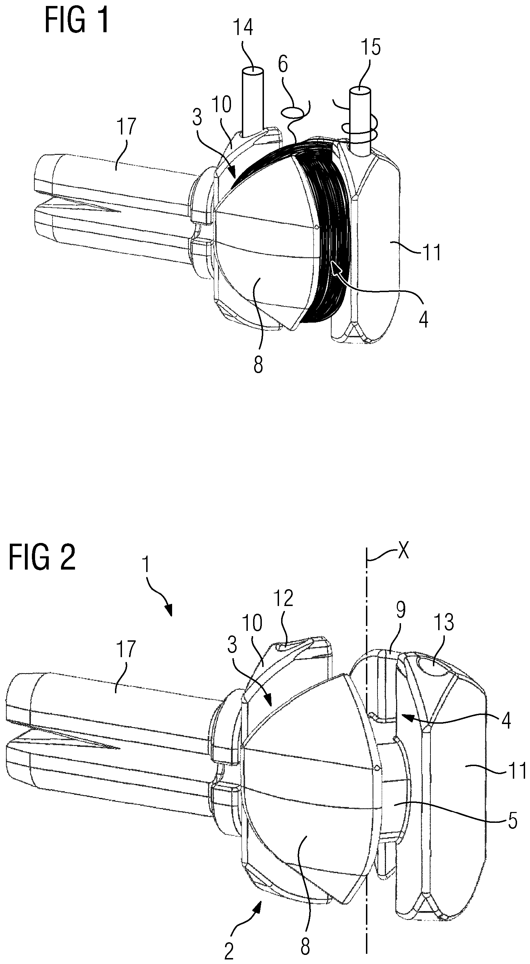

In der Figur 1 ist ein Wirbelstromsensor S gemäß der vorliegenden Erfindung dargestellt. Dieser umfasst einen Spulengrundkörper 1, welcher nach dem SLS-Verfahren generativ gefertigt ist und aus einem Kunststoffmaterial besteht. Der Spulengrundkörper 1 besitzt einen Wickelkopf 2, der eine Längsachse X des Spulengrundkörpers 1 definiert und in dessen Außenfläche zwei Umfangsnuten 3, 4 ausgebildet sind, die sich jeweils entlang des gesamten Umfangs des Wickelkopfs 2 um einen Wickelkern 5 erstrecken, wobei sich die Umfangsnuten 3, 4 an der Oberseite und an der Unterseite des Wickelkopfes 2 jeweils an der Längsachsenposition unter einem Winkel von 90° kreuzen. In die Umfangsnuten 3, 4 ist ein Spulendraht 6 nach Art einer Kreuzwicklung gewickelt.

Durch die Umfangsnuten 3, 4 erhält der Spulengrundkörper 1 eine Struktur mit einem zentralen Wickelkern 5, um welchen der Spulendraht 6 nach Art einer Kreuzwicklung gelegt wird/ist, und vier Haltestegen 8, 9, 10, 11, welche sich in der Längsachsenrichtung erstrecken und sowohl in Richtung der beiden axialen Endbereiche des Wickelkopfes 2, als auch in radialer Richtung über den Wickelkern 5 vorstehen. Dabei sind die einander jeweils diametral gegenüberliegenden Haltestege 8, 9, 10, 11 zueinander korrespondierend ausgebildet, d.h. sie besitzen den gleichen Querschnitt und die gleiche Außenform.

Die Form der Haltestege 8, 9, 10, 11 ist an die Kontur der abzutastenden bzw. zu prüfenden Oberfläche angepasst ausgestaltet. Wie in den Figuren 1 bis 4 gut erkennbar ist, sind in dem dargestellten Ausführungsbeispiel die vorne und hinten liegenden Haltstege 8, 9 etwas breiter als die rechts und links liegenden Haltestege 10, 11 ausgestaltet. Dabei besitzen die vorderen und hinteren Haltestege 8, 9 eine konkav gekrümmte Außenfläche und laufen spitz zu, während die anderen beiden, rechts und links liegenden Haltestege 10, 11 außenseitig eben oder im Wesentlichen eben ausgebildet sind und über ihre Länge eine dreieckige Querschnittsfläche besitzen, wobei ihre unteren Enden abgerundet sind. An der Oberseite weisen diese rechten und linken Haltstege 10, 11 jeweils eine Aufnahme 12, 13 auf, in welche elektrische Anschlussfahnen 14, 15 eingesteckt oder einsteckbar sind.

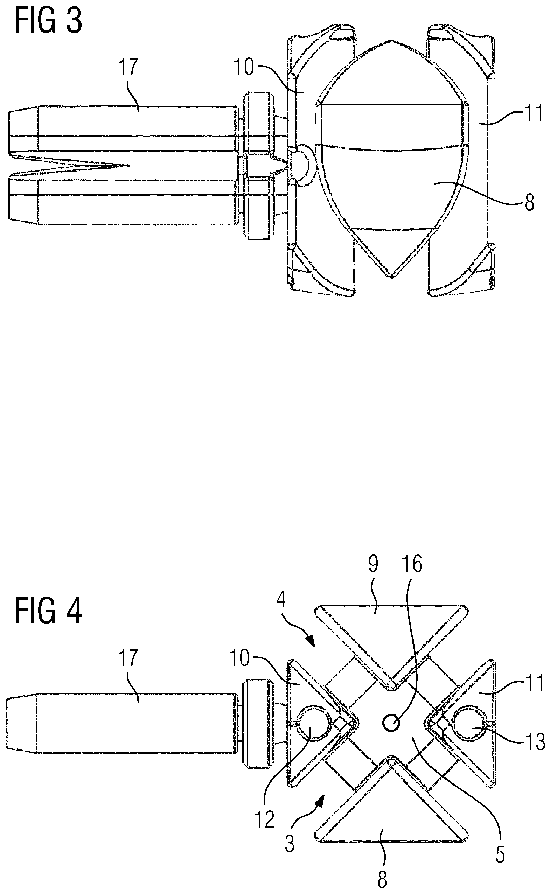

In der Figur 4 ist erkennbar, dass in der Oberseite des Wickelkerns 5 eine Aufnahme 16 vorgesehen ist, in welche vor dem Aufwickeln des Spulendrahts 6 eine ferromagnetische Kugel eingeklebt wird.

An der Außenseite eines Haltestegs - hier des linken Haltestegs 10 - ist ein Befestigungszapfen 17 vorgesehen, der dazu dient, den Spulengrundkörper 1 während des Wickelns insbesondere in einer Wickelvorrichtung zu halten. Der Befestigungszapfen 17 weist in der dargestellten Ausführungsform zwei übereinanderliegende Zylinderzapfen auf, so dass der Befestigungszapfen 17 in Längsachsenrichtung des Spulengrundkörpers 2 eine längliche Querschnittskontur erhält, und ragt radial von dem Haltesteg 10 ab. Nach der Fertigstellung des Wirbelstrom-sensors S wird der Befestigungszapfen 17 von dem Haltesteg 10 entfernt, beispielsweise abgeschnitten.

Wie ferner die Figur 1 zeigt, wird/ist der Spulendraht 6 jeweils in Schichten bestehend aus einer vorgegebenen Anzahl von Wicklungen im Wechsel in der einen Umfangsnut 3 und in der anderen Umfangsnut 4 um den Wickelkern 5 gewickelt.

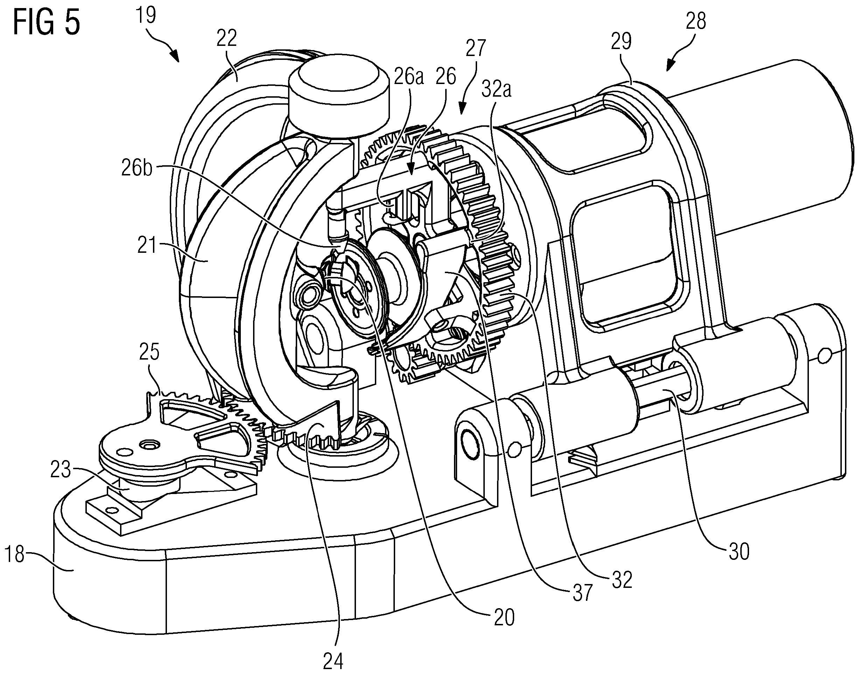

In der Figur 5 ist in perspektivischer Ansicht eine Wickelvorrichtung dargestellt, die dazu dient, den Wickelvorgang automatisch auszuführen. Die Wickelvorrichtung umfasst einen Basiskörper 18, an welchem die Komponenten der Wickelvorrichtung gehalten sind. Im Einzelnen umfasst die Wickelvorrichtung eine Halterung 19, die an dem Basiskörper 18 vorgesehen und ausgebildet ist, um den Spulengrundkörper 1 in der Weise zu halten, dass seine Längsachse X vertikal ausgerichtet ist und eine definierte Position einnimmt. Hierzu weist die Halterung 19 eine horizontale Aufnahme 20 auf, in welche der Befestigungszapfen 17 des Spulengrundkörpers 1 horizontal eingeschoben und in welcher er klemmend fixiert werden kann. Die Kontur der Aufnahme 20 ist komplementär zu der länglichen Querschnittskontur des Befestigungszapfens 17 des Spulengrundkörpers 1 ausgebildet, so dass die Längsachse X des Spulenkörpers 1 im eingeschobenen Zustand ihre gewünschte Position und vertikale Ausrichtung einnimmt.

Die Halterung 19 ist in der Weise ausgebildet, dass ein in der Aufnahme 20 gehaltener Spulengrundkörper 1 um seine Längsachse X zwischen zwei definierten, den Umfangsnuten 3, 4 des Spulengrundkörpers 1 zugeordneten Drahtwickelpositionen um einen vorgegebenen Winkel, welcher dem Winkelversatz der Umfangsnuten 3, 4 des Spulenkörpers 1 entspricht und somit 90° beträgt, zu verschwenken. Die Anordnung ist dabei so getroffen, dass in jeder Drahtwickelposition die zugeordnete Umfangsnut 3, 4 eine definierte Wickelausrichtung einnimmt, in der sie in einer vertikalen Ebene liegt, welche insbesondere die Längsachse X einschließt, wobei die Wickelausrichtung in beiden Drahtwickelpositionen übereinstimmt.

In der dargestellten Ausführungsform umfasst die Halterung 19 einen Rahmen 21 C-förmiger Grundform, welcher an dem Basiskörper 18 fixiert und um eine Schwenkachse, welche koaxial zu der gewünschten Position der Längsachse X eines in der Aufnahme 20 eingespannten Spulengrundkörpers 1 liegt, d.h. um eine vertikale Achse an dem Basiskörper 18 schwenkbar gehalten ist. Die Lagerung des C-förmigen Rahmens 21 erfolgt in dem dargestellten Ausführungsbeispiel über einen ebenfalls C-förmigen Halterahmen 22, dessen unteres Ende an dem Basiskörper 18 fixiert ist. Der C-förmige Rahmen 21 der Halterung 19 greift in den Halterahmen 22 ein, wobei seine freien Endbereiche an den freien Enden des Halterahmens 22 gelagert sind. Hierzu kann der C-förmige Rahmen 21 der Halterung 19 entsprechende Gelenkzapfen aufweisen, die in vertikaler Richtung von den Endbereichen des C-förmigen Rahmens 21 nach außen abragen und in korrespondierende Lagerausnehmungen des Halterahmens 22 eingreifen.

Der C-förmige Rahmen 21 ist zur Ausführung seiner Schwenkbewegungen zwischen den Wickelpositionen motorisch angetrieben. Hierzu ist ein entsprechender Elektromotor vorgesehen, welcher in dem Basiskörper 18 angeordnet ist, wobei die Antriebswelle 23 des Elektromotors nach oben aus dem Basiskörper 18 ragt und mit dem C-förmigen Rahmen 21 gekoppelt ist. Konkret ist an dem Rahmen 21 eine Verzahnung 24 vorgesehen, die mit einer entsprechenden, an der Antriebswelle 23 des Elektromotors vorgesehenen Gegenverzahnung 25 in Eingriff steht, um den Rahmen 21 und damit die Halterung 19 zwischen den Drahtwickelpositionen zu verschwenken.

Die Wickelvorrichtung umfasst ferner eine Drahtführung 26, die ausgebildet und an dem Basisträger 18 angeordnet ist, um in einer zu der Wickelebene parallelen Ebene eine Wickelbewegung entlang einer Kreisbahn um einen in der Halterung 19 fixierten Spulengrundkörper 1 und zusätzlich eine translatorische Vorschubbewegung quer, hier senkrecht zu der Wickelebene auszuführen. Hierzu ist die Drahtführung 26 an einem Träger 27 angebracht, welcher der Halterung 19 für den Spulengrundkörper 1 gegenüberliegend an dem Basiskörper 18 positioniert und um die Achse der von der Drahtführung 26 zu beschreibenden Kreisbahn, d.h. koaxial zu einer durch die Aufnahme der Halterung definierte, senkrecht zu der Längsachse X stehende und diese schneidende Achse Y ausgerichtet. Zusätzlich ist die Drahtführung 26 zur Ausführung der Vorschubbewegung translatorisch bewegbar an dem Basisträger 18 gehalten.

Dem Träger 27 ist ein Antrieb 28 zugeordnet, über welchen der Träger 26 rotierend angetrieben und zur Ausführung der Vorschubbewegung translatorisch verstellt werden kann. In der Figur 5 ist erkennbar, dass der Träger 27 zur Ausführung der Vorschubbewegung über eine Stützanordnung 29 an zwei Führungsschienen 30 und senkrecht zu der Wickelebene geradlinig bewegbar geführt ist über einen nicht gezeigten Motor des Antriebs verstellt werden kann. In der Stützanordnung 29 ist das Gehäuse 30 eines Motors zum rotierenden Antreiben des Trägers 27 gehalten, an dessen Antriebswelle in nicht gezeigter Weise der Träger 27 montiert ist.

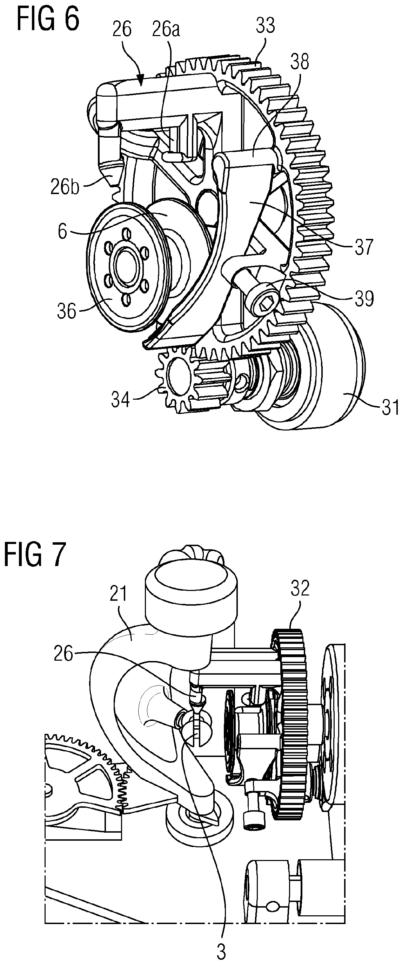

Die Wickelvorrichtung umfasst ferner eine zentrale Steuerung, um die Motoren zum Antreiben des Trägers 27 und des C-förmigen Rahmens 21 der Halterung 19 zu steuern. Dieser Steuerung ist ein Drehencoder 31 zugeordnet, der vorgesehen ist, um die jeweilige Winkelposition des Trägers 27 zu erfassen und auf den Grundlage der jeweiligen Winkelposition und/oder der erfolgten Umdrehungen des Trägers 27 die Rotationsbewegung sowie die translatorische Bewegung des Trägers 27 sowie die von der Halterung 19 auszuführende Schwenkbewegung in Abhängigkeit von Signalen des Drehencoders 31 zu steuern. Der Träger 27 weist hierzu ein Orbitalrad 32 auf, welches an seinem Außenumfang eine Verzahnung 33 trägt, mit welcher eine entsprechende Gegenverzahnung 34 des Drehencoders 31 in Eingriff steht (siehe auch Figur 6).

Schließlich ist an dem Träger 27 ein Spulenhalter vorgesehen, an dem eine Entnahmespule 36 für den Spulendraht 6 drehbar angebracht ist. Die Anordnung ist konkret so getroffen, dass der Spulenhalter 35 um eine parallel zu der durch die Aufnahme 20 der Halterung 19 definierte Achse Y drehbar an einer Speiche 32a des Orbitalrades 32 gehalten ist. Die Drahtführung 26 ist etwa U-förmig ausgebildet und definiert einen Drahtführungskanal, dessen Drahteinlassbereich 26a und Drahtauslassbereich 26b an den freien Enden der U-Schenkel vorgesehen sind und nach innen zu der Drehachse des Trägers 27 weisen. Dabei liegt der Drahteinlassbereich 26a der Drahtführung 26 im axialen Erstreckungsbereich der Entnahmespule 36 und der Drahtauslassbereich 26b der Drahtführung 26 in einem axialen Erstreckungsbereich, in welchem ein Spulendraht 1 auf einen Spulengrundkörper gewickelt werden soll. Die Länge des die U-Schenkel verbindenden U-Stegs ist entsprechend ausgebildet.

Wenn der Träger 27 gedreht wird, um einen Spulendraht auf einen Spulengrundkörper 1 zu wickeln, wird der Spulendraht von dem Spulenhalter 35 abgewickelt, wodurch dieser in Drehung um die Achse Y versetzt wird. Um eine ausreichende Drahtspannung in dem Spulendraht einzustellen, sind dem Spulenhalter 35 Bremsmittel zugeordnet, die mit der Entnahmespule 36 in Reibkontakt bringbar sind, um diese abzubremsen. In der dargestellten Ausführungsform umfassen die Bremsmittel einen Bremssteg 37, der an dem Orbitalrad 32 um eine zu der Drehachse des Trägers 27 parallele Schwenkachse schwenkbar 38 gehalten und in Kontakt mit der Entnahmespule 36 bringbar ist. Ferner ist eine Stellschraube 39 vorgesehen, die von außen gegen den Bremssteg 37 gesetzt werden kann, um den Bremssteg 37 gegen die Entnahmespule 36 zu drücken.

Zur Herstellung eines Wirbelstromsensors wird ein Spulengrundkörper 1 mit einer eingeklebten ferromagnetischen Kugel in die Aufnahme 20 der Halterung 19 der Wickelvorrichtung klemmend eingeschoben und somit in der Weise positioniert, dass die Längsachse X des Spulenkörpers 1 koaxial zu der Drehachse des C-förmigen Rahmens 21 der Halterung 19 ausgerichtet ist.

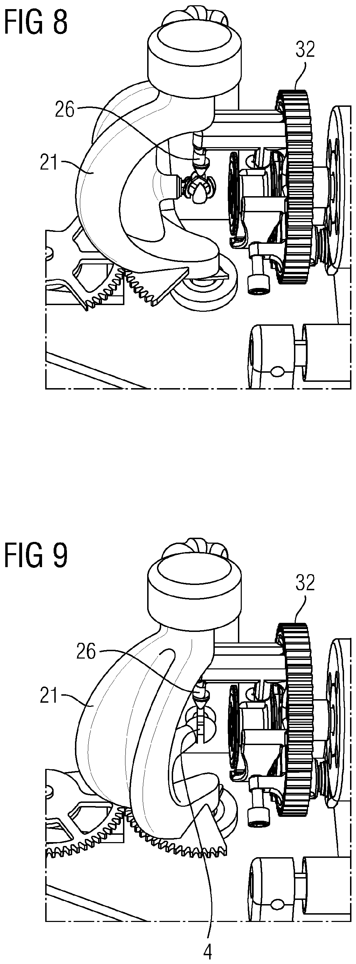

An dem Träger 27 der Wickelvorrichtung ist eine Entnahmespule 36 angebracht, auf welche der Spulendraht 6 als Reservoir gewickelt ist. Das freie Ende des Spulendrahtes 6 wird durch die Drahtführung 26 gefädelt und an dem Spulengrundkörper 1 befestigt, indem es zusammen mit dem Befestigungszapfen 17 in der Aufnahme 20 der Halterung festgeklemmt wird. Dabei wird der Träger 27 axial so positioniert, dass der Drahtauslassbereich 26b der Drahtführung 26 im axialen Erstreckungsbereich der Umfangsnut 3 liegt, in welcher der Spulendraht 6 zunächst gewickelt werden soll. Ferner wird die Halterung 19 in ihre erste Drahtwickelposition gebracht (siehe Figur 7). Nun wird der Träger 27 rotierend angetrieben, so dass er sich entlang einer Kreisbahn um den Spulengrundkörper 1 bewegt und somit in der Umfangsnut 3 der Spulendraht 6 um den Wickelkern 5 des Spulengrundkörpers 1 gewickelt wird. Gleichzeitig wird der Träger 27 axial durch Verstellung entlang der Führungsschienen 30 verstellt, so dass die hergestellten Spulenwicklungen nebeneinander in der Umfangsnut 3 zum Liegen kommen. Wenn eine gewünschte Anzahl nebeneinander liegender Spulenwicklungen, d.h. eine Wicklungsschicht oder -lage hergestellt ist, wird die Halterung 19 in ihre zweite Drahtwickelposition gebracht, indem der C-förmige Rahmen 21 durch Betätigung des Elektromotors um 90° verschwenkt wird (siehe Figuren 8 und 9). Dieser Schwenkvorgang findet statt, wenn der Drahtauslassbereich 26b der Drahtführung 26 genau oberhalb oder unterhalb der Kreuzungsbereiche der beiden Umfangsnuten 3, 4 des Spulengrundkörpers 1 positioniert ist, so dass der Spulendraht 6 von der einen Umfangsnut 3 in die andere Umfangsnut 4 umgelegt und in dieser um den Wickelkern 5 gewickelt wird, wenn die Drahtführung 26 durch Betätigung des Trägers 27 wieder um den Spulengrundkörper 1 gedreht und gleichzeitig translatorisch bewegt wird. Zum Herstellen von weiteren Wicklungsschichten wird die Halterung in ihre erste Drahtwickelposition zurück geschwenkt und der vorbeschriebene Prozess wird so oft wie gewünscht wiederholt.

Dieser Wicklungsvorgang wird über die Steuerung der Wickelvorrichtung automatisch gesteuert. Hierzu werden über den Drehencoder 31 Signale abgegeben, über welche die Steuerung erfährt, in welcher Winkelposition sich der Träger 27 befindet, d.h. wie viele Umdrehungen die Drahtführung 26 um den Spulengrundkörper 1 ausgeführt hat, um entsprechend den Motor zur Ausführung der translatorischen Vorschubbewegung des Trägers 27 und den Elektromotor zum Verschwenken der Halterung 19 in Abhängigkeit von den erfassten Winkelpositionen zu betätigen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, soweit sie unter die Definition der folgenden Patentansprüche fallen.

## Patentansprüche

1. Spulengrundkörper (1) zur Herstellung eines Wirbelstrom-sensors(S) mit einem eine Längsachse (X) definierenden Wickelkopf (2),
in dessen Außenfläche zwei Umfangsnuten (3, 4) ausgebildet sind die
sich jeweils entlang des gesamten Umfangs des Wickelkopfs (2) um einen Wickelkern (5) erstrecken,
wobei sich die Umfangsnuten (3, 4) an der Oberseite und der Unterseite des Wickelkopfes (2) an der Längsachsenposition kreuzen und zur Aufnahme eines um den Wickelkern (5) nach Art einer Kreuzwicklung zu wickelnden Spulendrahtes (6) dienen, und
wobei die Umfangsnuten (3, 4) in Umfangsrichtung betrachtet durch Haltestege (8, 9, 10, 11) begrenzt werden,
die sich in der Längsachsenrichtung erstrecken und in Richtung der beiden axialen Endbereiche des Spulengrundkörpers (1),
sowie in radialer Richtung über den Wickelkern (5) vorstehen, **dadurch gekennzeichnet, dass** in einer Oberseite des Wickelkerns (5), insbesondere in einem Kreuzungsbereich der beiden Umfangsnuten (3, 5), eine Aufnahme (16) zum Einkleben einer Kugel aus ferromagnetischem Material ausgebildet ist.

2. Spulengrundkörper (1) nach Anspruch 1,
**dadurch gekennzeichnet, dass**
sich die Umfangsnuten (3, 4) unter einem Winkel von 90° kreuzen und/oder zwei einander diametral gegenüberliegenden Haltestege (8, 9, 10, 11) zueinander korrespondierende Querschnitte aufweisen und/oder wenigstens ein Haltesteg (8, 9) eine in der Längsrichtung und/oder der Umfangsrichtung konkav gekrümmte Außenfläche aufweist und/oder wenigstens ein Haltesteg (8, 9) zu einem axialen Endbereich oder beiden axialen Endbereichen des Wickelkörpers (2) hin spitz zulaufend ausgebildet ist.

3. Spulengrundkörper (1) nach einem der vorherigen Ansprüche, **dadurch gekennzeichnet, dass**
in den axial vorderen oder hinteren Stirnflächen von zwei Haltestegen (10, 11),
insbesondere von zwei einander diametral gegenüberliegenden Haltestegen (10, 11), Aufnahmen (12, 13) ausgebildet sind,
in welche elektrische Anschlussfahnen (14, 15) eingesteckt oder einsteckbar sind und/oder
radial an der Außenseite eines Haltestegs ein Befestigungszapfen (17) zur Halterung des Spulengrundkörpers (1) in einer Wickeleinrichtung vorgesehen ist.

4. Spulengrundkörper (1) nach einem der vorherigen Ansprüche, **dadurch gekennzeichnet, dass**
er durch ein generatives Fertigungsverfahren,
insbesondere durch ein selektives Lasersinterverfahren (SLS) hergestellt ist und/oder aus einem Kunststoffmaterial und/oder
aus einem keramischen Material besteht.

5. Wirbelstromsensor (S) mit einem Spulengrundkörper (1) nach einem der vorherigen Ansprüche,
wobei im Bereich der Umfangsnuten (3, 4) ein Spulendraht (6) nach Art einer Kreuzwicklung um den Wickelkern (5) gewickelt ist.

6. Wirbelstromsensor (S) nach Anspruch 5,
**dadurch gekennzeichnet, dass**
der Spulendraht (6) in Schichten jeweils bestehend aus einer vorgegebenen Anzahl von Wicklungen im Wechsel in der einen Umfangsnut (3) und der anderen Umfangsnut (4) um den Wickelkern (5) gewickelt ist und/oder der Spulendraht (6) derart um den Wickelkern (5) gewickelt ist, dass er vollständig innerhalb der Umfangsnuten (3, 4) liegt, die zwischen den Haltestegen (8, 9, 10, 11) definiert werden.

7. Wickelvorrichtung zum Wickeln eines Spulendrahtes (6) auf einen Spulengrundkörper (1) nach einem der Ansprüche 1 bis 4, umfassend
- einen Basiskörper (18),
- eine Halterung (19), die an dem Basiskörper (18) vorgesehen und ausgebildet ist, um einen Spulengrundkörper (1) mit einer definierten Position und Ausrichtung seiner Längsachse (X) zu fixieren und den Spulengrundkörper (1) um seine Längsachse (X) zwischen zwei definierten, den Umfangsnuten (3, 4) des Spulengrundkörpers (1) zugeordneten Drahtwickelpositionen um einen vorgegebenen Winkel, welcher dem Winkelversatz der Umfangsnuten (3, 4) des Spulengrundkörpers (1) entspricht und bevorzugt 90° beträgt, zu verschwenken, so dass in jeder Drahtwickelposition die zugeordnete Umfangsnut (3, 4) eine definierte Wickelausrichtung in einer die Längsachse (X) einschließenden Wickelebene einnimmt, die in beiden Drahtwickelpositionen übereinstimmen, und
- eine Drahtführung (26), die ausgebildet und an dem Basiskörper (18) angeordnet ist, um in einer zu der Wickelebene parallelen Ebene eine Wickelbewegung entlang einer Kreisbahn um einen in der Halterung fixierten Spulengrundkörpers (1) und zusätzlich eine translatorische Vorschubbewegung quer, insbesondere senkrecht zu der Wickelebene auszuführen.

8. Wickelvorrichtung nach Anspruch 7,
**dadurch gekennzeichnet, dass**
die Halterung (19) ausgebildet ist,
den Spulengrundkörper (1) in der Weise zu halten, dass seine Längsachse (X) vertikal ausgerichtet ist, und entsprechend die Drahtführung (26) ausgebildet ist, entlang einer Kreisbahn in einer vertikalen Ebene um einen in der Halterung (19) fixierten Spulengrundkörper (1) bewegt zu werden.

9. Wickelvorrichtung nach Anspruch 7 oder 8,
**dadurch gekennzeichnet, dass**
die Halterung (19) eine Aufnahme (20) aufweist, in welche ein Befestigungszapfen (17) des Spulengrundkörpers (1) in definierter Ausrichtung horizontal eingeschoben und fixiert, insbesondere festgeklemmt werden kann.

10. Wickelvorrichtung nach einem der Ansprüche 7 bis 9,
**dadurch gekennzeichnet, dass**
die Drahtführung (26) an einem Träger (27) angebracht ist, welcher der Halterung (19) für den Spulengrundkörper (1) gegenüberliegend positioniert und
um die Achse (Y) der von der Drahtführung (26) zu beschreibenden Kreisbahn drehbar sowie zur Ausführung der Vorschubbewegung translatorisch bewegbar an dem Basisträger (18) gehalten ist.

11. Wickelvorrichtung nach einem der Ansprüche 9 bis 10,
**dadurch gekennzeichnet, dass**
dem Träger (27) wenigstens ein Antrieb (28) zugeordnet ist, über welchen der Träger (27) rotierend angetrieben und zur Ausführung der Vorschubbewegung translatorisch verstellt werden kann.

12. Wickelvorrichtung nach Anspruch 11,
**dadurch gekennzeichnet, dass** ein Drehencoder (31) vorgesehen ist, um die jeweilige Winkelposition des Trägers (27) zu erfassen und der Drehencoder (31) mit einer zentralen Steuerung gekoppelt ist, um die Rotationsbewegung und/oder
die translatorische Bewegung des Trägers (27) und/oder
die von der Halterung auszuführende Schwenkbewegung in Abhängigkeit von Signalen des Drehencoders (31) zu steuern und der Träger (27) optional ein Orbitalrad (32) aufweist,
das an seinem Außenumfang eine Verzahnung (33) trägt,
mit welcher eine entsprechende Gegenverzahnung (34) des Drehencoders (31) in Eingriff steht.

13. Wickelvorrichtung nach einem der Ansprüche 7 bis 12,
**dadurch gekennzeichnet, dass**
an dem Basiskörper (18) oder an dem Träger (27) ein Spulenhalter (35) vorgesehen ist,
an dem eine Entnahmespule (36) für den Spulendraht (6) so anbringbar oder angebracht ist, dass sie um eine Spulenhalterachse, die koaxial zu der Achse (Y) der von der Drahtführung (26) zu beschreibenden Kreisbahn oder parallel zu dieser verläuft, drehbar ist,
wobei die Drahtführung (26) derart ausgebildet ist, dass ein Drahteinlassbereich (26a) der Drahtführung (26) im axialen Erstreckungsbereich der Entnahmespule (36) liegt und ein Auslassbereich (26b) der Drahtführung (26) in einem axialen Erstreckungsbereich, in welchem ein Spulendraht (6) auf einen Spulengrundkörper (1) gewickelt werden soll, liegt und dem Spulenhalter (35) optional Bremsmittel zugeordnet sind, die mit einer an dem Spulenhalter (35) gehaltenen Entnahmespule (36) in Reibkontakt bringbar sind,
um diese abzubremsen und hierdurch die Drahtspannung in dem zugeführten Spulendraht (6) einzustellen.

14. Wickelvorrichtung nach einem der Ansprüche 7 bis 12,
**dadurch gekennzeichnet, dass**
die Halterung (19) für den Spulengrundkörper (1) einen Rahmen (21) C-förmiger Grundform aufweist, welcher um die Längsachse (X) schwenkbar an dem Basiskörper (18) gehalten ist und
der insbesondere an seinem oberen und unteren Ende an einem ebenfalls C-förmigen Halterahmen (22), der an dem Basiskörper (18) fixiert ist, gelagert ist.

15. Wickelvorrichtung nach Anspruch 14,
**dadurch gekennzeichnet, dass**
der Rahmen (21) eine Verzahnung (33) trägt, die mit einer Gegenverzahnung (34) eines Motors in Eingriff steht, um den Rahmen (21) und damit die Halterung (19) zwischen den Wickelpositionen zu verschwenken,
wobei der Motor bevorzugt mit der zentralen Steuerung verbunden ist und über diese betätigt wird.

## Claims

1. Coil former (1) for producing an eddy current sensor (S) having a winding head (2) defining a longitudinal axis (X),
in the outer surface of which two circumferential grooves (3, 4) are formed, which each extend around a winding core (5) along the entire circumference of the winding head (2),
wherein the circumferential grooves (3, 4) cross at the top side and the bottom side of the winding head (2) in the longitudinal axis position and serve for receiving a coil wire (6) to be wound around the winding core (5) in the manner of a cross winding, and
wherein the circumferential grooves (3, 4), as seen in the circumferential direction, are delimited by holding webs (8, 9, 10, 11),
which extend in the longitudinal axis direction and in the direction of the two axial end regions of the coil former (1), and protrude over the winding core (5) in the radial direction, **characterized in that** a receiving means (16) for sticking in a ball of ferromagnetic material is formed in a top side of the winding core (5), in particular in a crossing region of the two circumferential grooves (3, 5).

2. Coil former (1) according to Claim 1,
**characterized in that**
the circumferential grooves (3, 4) cross at an angle of 90° and/or two mutually diametrically opposed holding webs (8, 9, 10, 11) have mutually corresponding cross-sections and/or at least one holding web (8, 9) has an outer surface which is concavely curved in the longitudinal direction and/or the circumferential direction and/or at least one holding web (8, 9) is formed to taper towards an axial end region or both axial end regions of the winding body (2).

3. Coil former (1) according to one of the preceding claims,
**characterized in that**
receiving means (12, 13) are formed in the axially front or rear end faces of two holding webs (10, 11),
in particular of two diametrically opposed holding webs (10, 11),
in which receiving means electrical connection lugs (14, 15) are inserted or can be inserted and/or
a securing pin (17) for holding the coil former (1) in a winding device is provided radially on the outer side of a holding web.

4. Coil former (1) according to one of the preceding claims,
**characterized in that**
it is produced by a generative manufacturing method,
in particular by a selective laser sintering method (SLS), and/or consists of a plastics material and/or
of a ceramics material.

5. Eddy current sensor (S) having a coil former (1) according to one of the preceding claims,
wherein a coil wire (6) is wound around the winding core (5) in the region of the circumferential grooves (3, 4) in the manner of a cross winding.

6. Eddy current sensor (S) according to Claim 5,
**characterized in that**
the coil wires (6) are wound around the winding core (5) alternately in the one circumferential groove (3) and the other circumferential groove (4), in each case in layers consisting of a predetermined number of windings, and/or the coil wire (6) is wound around the winding core (5) in such a way that it lies completely within the circumferential grooves (3, 4) which are defined between the holding webs (8, 9, 10, 11).

7. Winding device for winding a coil wire (6) onto a coil former (1) according to one of Claims 1 to 4,
comprising
- a base body (18),
- a holder (19), which is provided and formed on the base body (18) to fix a coil former (1) in a defined position and alignment of its longitudinal axis (X) and to pivot the coil former (1) through a predetermined angle about its longitudinal axis (X) between two defined wire winding positions associated with the circumferential grooves (3, 4) of the coil former (1), which angle corresponds to the angular offset of the circumferential grooves (3, 4) of the coil former (1) and is preferably 90°, so that, in each wire winding position, the associated circumferential groove (3, 4) assumes a defined winding alignment in a winding plane which includes the longitudinal axis (X), which winding planes coincide in both wire winding positions, and
- a wire guide (26), which is formed and arranged on the base body (18) to execute a winding movement along a circular path about a coil former (1) fixed in the holder in a plane parallel to the winding plane and, in addition, a translatory feed movement transversely, in particular perpendicularly, to the winding plane.

8. Winding device according to Claim 7,
**characterized in that**
the holder (19) is formed
to hold the coil former (1) in such a way that its longitudinal axis (X) is aligned vertically and, accordingly, the wire guide (26) is formed to be moved along a circular path in a vertical plane about a coil former (1) fixed in the holder (19).

9. Winding device according to Claim 7 or 8,
**characterized in that**
the holder (19) has a receiving means (20) into which a securing pin (17) of the coil former (1) can be pushed and fixed, in particular clamped, horizontally in a defined alignment.

10. Winding device according to one of Claims 7 to 9,
**characterized in that**
the wire guide (26) is mounted on a carrier (27) which is positioned opposite the holder (19) for the coil former (1) and is held on the base carrier (18) such that it is rotatable about the axis (Y) of the circular path to be described by the wire guide (26) and is movable in a translatory manner for executing the feed movement.

11. Winding device according to one of Claims 9 to 10,
**characterized in that**
at least one drive (28) is associated with the carrier (27), via which drive the carrier (27) can be driven in a rotating manner and adjusted in a translatory manner for executing the feed movement.

12. Winding device according to Claim 11,
**characterized in that** a rotary encoder (31) is provided to detect the respective angular position of the carrier (27) and the rotary encoder (31) is coupled to a central control to control the rotational movement and/or the translatory movement of the carrier (27) and/or the pivoting movement to be executed by the holder depending on signals of the rotary encoder (31) and the carrier (27) optionally has an orbital wheel (32),
which has teeth (33) on its outer circumference,
with which corresponding counter-teeth (34) of the rotary encoder (31) are in engagement.

13. Winding device according to one of Claims 7 to 12,
**characterized in that**
a reel holder (35) is provided on the base body (18) or on the carrier (27),
on which reel holder a draw-off reel (36) for the coil wire (6) can be mounted or is mounted such that it is rotatable about a reel holder axis, which extends coaxially to the axis (Y) of the circular path to be described by the wire guide (26) or parallel thereto,
wherein the wire guide (26) is formed in such a way that a wire inlet region (26a) of the wire guide (26) lies in the axial region of extent of the draw-off reel (36) and an outlet region (26b) of the wire guide (26) lies in an axial region of extent in which a coil wire (6) is to be wound onto a coil former (1) and brake means are optionally associated with the reel holder (35), which brake means can be brought into frictional contact with a draw-off reel (36) held on the reel holder (35),
to brake this draw-off reel and thereby adjust the wire tension in the coil wire (6) supplied.

14. Winding device according to one of Claims 7 to 12,
**characterized in that**
the holder (19) for the coil former (1) has a frame (21) with a C-shaped basic shape, which is held on the base body (18) such that it is pivotable about the longitudinal axis (X) and which is supported, in particular at its top and bottom end, on a likewise C-shaped holding frame (22) which is fixed on the base body (18).

15. Winding device according to Claim 14,
**characterized in that**
the frame (21) has teeth (33) which are in engagement with counter-teeth (34) of a motor to pivot the frame (21), and therefore the holder (19), between the winding positions, wherein the motor is preferably connected to the central control and actuated via this.

## Revendications

1. Mandrin (1) pour fabriquer un capteur (S) à courant de Foucault ayant une tête (2) de bobinage définissant un axe (X) longitudinal,
dans la surface extérieure de laquelle sont constituées deux rainures (3, 4) de pourtour, qui
s'étendent chacune autour d'un noyau (5) de bobinage de long de tout le pourtour de la tête (2) de bobinage,
dans lequel les rainures (3, 4) de pourtour se croisent en la position de l'axe longitudinal sur le côté supérieur et le côté inférieur de la tête (2) de bobinage et servent à la réception d'un fil (6) métallique de bobine à enrouler autour du noyau (5) de bobinage à la manière d'un enroulement croisé et
dans lequel les rainures (3, 4) de pourtour sont, considéré dans la direction du pourtour, délimitées par des entretoises (8, 9, 10, 11) de maintien,
qui s'étendent dans la direction de l'axe longitudinal et dans la direction des deux parties d'extrémité axiales du mandrin (1) ,
et qui dépassent dans la direction radiale du noyau (5) de bobinage,
**caractérisé en ce que** dans un côté supérieur du noyau (5) de bobinage, notamment dans une partie de croisement des deux rainures (3, 5) de pourtour, est constitué un logement (16) pour le collage d'une bille en matériau ferromagnétique.

2. Mandrin (1) suivant la revendication 1,
**caractérisé en ce que**
les rainures (3, 4) de pourtour se croisent en faisant un angle de 90° et/ou deux entretoises (8, 9, 10, 11) de maintien, opposées diamétralement l'une à l'autre, ont des sections transversales qui se correspondent l'une à l'autre et/ou au moins une entretoise (8, 9) de maintien a une surface extérieure concave dans la direction longitudinale et/ou dans la direction du pourtour et/ou au moins une entretoise (8, 9) de maintien pointe vers une partie d'extrémité axiale ou vers les deux parties d'extrémité axiales de la tête (2) de bobinage.

3. Mandrin (1) suivant l'une des revendications précédentes,
**caractérisé en ce que**
dans les surfaces frontales avant et arrière axialement de deux entretoises (10, 11) de maintien,
notamment de deux entretoises (10, 11) de maintien opposées diamétralement l'une à l'autre sont constituées des logements (12, 13) dans lesquels sont enfichés ou peuvent l'être des languettes (14, 15) électriques de connexion et/ou il est prévu radialement au côté extérieur d'une entretoise de maintien un tenon (17) de fixation pour le maintien du mandrin (1) dans un dispositif de bobinage.

4. Mandrin (1) suivant l'une des revendications précédentes,
**caractérisé en ce que**
il est fabriqué par un procédé de fabrication génératif notamment par un procédé (SLS) de frittage laser sélectif et/ou **en ce qu'**il est en une matière plastique et/ou en un matériau céramique.

5. Capteur (S) de courant de Foucault comprenant un mandrin (1) suivant l'une des revendications précédentes,
dans lequel dans la partie des rainures (3, 4) de pourtour un fil (6) métallique de bobine est enroulé à la manière d'une enroulement croisé autour du noyau (5) de bobinage.

6. Capteur (S) de courant de Foucault suivant la revendication 5,
**caractérisé en ce que**
le fil (6) métallique de bobine est enroulé autour du noyau (5) de bobinage en alternant dans l'une des rainures (3) du pourtour et dans l'autre rainure (4) de pourtour, en des couches constituées chacune d'un nombre donné à l'avance d'enroulements et/ou le fil (6) métallique de bobine est enroulé autour du noyau (5) de bobinage de manière à se trouver entièrement à l'intérieur des rainures (3, 4) de pourtour qui sont définies entre les entretoises (8, 9, 10, 11) de maintien.

7. Installation de bobinage pour bobiner un fil (6) métallique de bobine sur un mandrin (1) suivant l'une des revendications 1 à 4,
comprenant
- une embase (18),
- une fixation (19) qui est prévue sur l'embase (18) et qui est constituée pour immobiliser un mandrin (1) en une position et orientation définies de son axe (X) longitudinal et pour faire pivoter le mandrin (1) autour de son axe (X) longitudinal, entre deux positions de bobinage de fil définies et associées aux rainures (3, 4) de pourtour du mandrin (1) d'un angle donné à l'avance qui correspond au décalage angulaire des rainures (3, 4) de pourtour du mandrin (1) et qui est de préférence de 90° de manière à ce que, dans chaque position d'enroulement du fil, la rainure (3, 4) de pourtour associée prenne une orientation de bobinage définie dans un plan de bobinage passant par l'axe (X) longitudinal, qui coïncident dans les deux positions de bobinage de fil, et
- un guide-fil (26) qui est constitué et disposé sur l'embase (18) pour exécuter dans un plan parallèle au plan de bobinage un mouvement de bobinage suivant une trajectoire autour d'un mandrin (1) immobilisé dans la fixation et en outre un mouvement d'avance en translation transversalement, notamment perpendiculairement au plan de bobinage.

8. Installation de bobinage suivant la revendication 7,
**caractérisé en ce que**
la fixation (19) est constituée
pour maintenir le mandrin (1) de manière à ce que son axe fixe longitudinal soit dirigé verticalement et d'une manière correspondante le guide-fil (26) est constitué pour être déplacé le long d'une trajectoire dans un plan vertical autour d'un mandrin (1) immobilisé dans la fixation (19).

9. Installation de bobinage suivant l'une des revendications 7 ou 8,
**caractérisé en ce que**
la fixation (19) à un logement (20) dans lequel un tenon (17) de fixation du mandrin (1) peut être inséré horizontalement et immobilisé en une orientation définie, en pouvant notamment être collé.

10. Installation de bobinage suivant l'une des revendications 7 à 9,
**caractérisé en ce que**
le guide-fil (26) est monté sur un support (27) qui est mis en position en regard de la fixation (19) du mandrin (1) et
qui peut tourner autour de l'axe (Y) de la trajectoire à décrire par le guide-fil (26) et qui est maintenu mobile en translation sur l'embase (18) pour l'exécution du mouvement d'avance.

11. Installation de bobinage suivant l'une des revendications 9 à 10,
**caractérisé en ce que**
au support (27) est associé au moins un entraînement (28) par lequel le support (27) peut être entraîné en rotation et peut être déplacé en translation pour l'exécution du mouvement d'avance.

12. Installation de bobinage suivant la revendication 11,
**caractérisé en ce que**
il prévu un codeur (31) de rotation pour relever la position angulaire respective du support (27) et coupler le codeur (31) de rotation à une commande centrale afin de commander le mouvement de rotation et/ou le mouvement de translation du support (27) et/ou le mouvement de pivotement exécuté par la fixation en fonction de signaux du codeur (31) de rotation et le support (27) a éventuellement une roue (32) orbitale, qui porte sur son pourtour extérieur une denture (33) avec laquelle engrène une denture (34) antagoniste correspondante du codeur (31) de rotation.

13. Installation de bobinage suivant l'une des revendications 7 à 12,
**caractérisé en ce que**
sur l'embase (18) ou sur le support (27) est prévu un porte-bobine (35)
sur lequel une bobine (36) de prélèvement du fil (6) de bobine est mis ou peut l'être de manière à pouvoir tourner autour d'un axe de porte-bobine qui s'étend co-axialement à l'axe (Y) de la trajectoire à décrire par le guide-fil (26) ou parallèlement à celle-ci,
dans laquelle le guide-fil (26) est constitué de manière à ce qu'une partie (26a) d'entrée du guide-fil (26) se trouve dans la partie d'étendue axiale de la bobine (36) de prélèvement et qu'une partie (26b) de sortie du guide-fil (26) se trouve dans une partie d'étendue axiale dans laquelle un fil (6) de bobine doit être enroulé sur le mandrin (1), et au porte-bobine (35) sont associés des moyens de freinage qui peuvent être mis en contact de friction avec une bobine (36) de prélèvement maintenue sur le porte-bobine (35),
afin de freiner celle-ci et régler ainsi la tension du fil dans le fil (6) de bobine apporté.

14. Installation de bobinage suivant l'une des revendications 7 à 12,
**caractérisée en ce que** la fixation (19) du mandrin (1) à un cadre (21) de forme de base en forme de C, qui est maintenu pivotant autour de l'axe (X) longitudinal sur l'embase (18) et qui est monté, notamment à son extrémité supérieure et inférieure, sur un cadre (22) de maintien également en forme de C, qui est immobilisé sur l'embase (18).

15. Installation de bobinage suivant la revendication 14, **caractérisée en ce que** le cadre (21) porte une denture (33) qui engrène avec une contredenture (34) d'un moteur, afin de faire pivoter le cadre (21) et ainsi la fixation (19) entre les positions de bobinage,
le moteur étant relié de préférence à la commande centrale et étant actionné par celle-ci.
